# FASCICULE DE BREVET EUROPEEN

(11) **EP 4 349 704 B1**
(45) Date de publication et mention de la délivrance du brevet: **09.04.2025**
(21) Numéro de dépôt: 23186816.7
(22) Date de dépôt: 20.07.2023
(51) Int. Cl.: B62M 3/04, B62M 3/06, B62M 3/00

(54) **PEDALIER A MANIVELLES EXTENSIBLES ET BICYCLETTE COMPRENANT UN TEL PEDALIER**
PEDAL MIT AUSFAHRBAREN KURBELN UND FAHRRAD MIT EINEM SOLCHEN PEDAL
PEDAL ASSEMBLY WITH EXTENSIBLE CRANKS AND BICYCLE COMPRISING SUCH A PEDAL ASSEMBLY

(30) Priorité: 03.10.2022 FR 2210087
(43) Date de publication de la demande: 10.04.2024
(73) Titulaire: Woutisseth, Alain, 76230 Isneauville (FR)
(72) Inventeur: Woutisseth, Alain, 76230 Isneauville (FR)
(74) Mandataire: Cabinet Chaillot

(56) Documents cités:
- DE-A1- 102009 033 456
- FR-A- 773 524

## Description

La présente invention concerne le domaine des pédaliers, et porte en particulier sur un pédalier à manivelles extensibles et sur une bicyclette comprenant un tel pédalier.

Un pédalier est le composant d'une bicyclette qui permet de convertir le mouvement alternatif des jambes du cycliste en un mouvement de rotation à l'aide de deux manivelles sur chacune desquelles est fixée une pédale, la rotation de l'axe du pédalier entraînant un système de transmission constitué d'un ou plusieurs plateaux qui entraînent une chaîne qui elle-même entraîne un pignon arrière fixé à la roue motrice de la bicyclette.

Un pédalier classique, ayant des manivelles de longueur fixe, possède un point mort lorsque les deux manivelles sont en position verticale, point mort auquel les deux jambes du cycliste poussent mais ne peuvent pas développer de force.

Afin de surmonter cet inconvénient, il existe des pédaliers avec des manivelles de longueur automatiquement variable lors de la rotation du pédalier, de manière à faciliter le passage du point mort du pédalier par le cycliste.

En particulier, la demande de brevet allemand DE102009033456A, qui montre toutes les caractéristiques du préambule de la revendication 1, demande de brevet français FR773524A et la demande internationale PCT WO93/19976A1 divulguent chacune un pédalier ayant des manivelles extensibles, le pédalier comprenant deux excentriques circulaires, un anneau rotatif étant monté autour de chacun des deux excentriques, chaque anneau rotatif étant relié à un bras de manivelle monté de manière coulissante dans un carter de manivelle relié à l'axe du pédalier, de telle sorte que, lors du pédalage, le bras de manivelle coulisse à l'intérieur du carter de manivelle, ce qui fait varier la longueur de la manivelle en fonction de sa position angulaire, l'allongement de la manivelle étant maximal à une certaine position angulaire prédéfinie de la manivelle. Ainsi, lorsque l'allongement des manivelles est maximal dans la phase de poussée, le pédalage est facilité pour le cycliste.

Dans la demande internationale PCT WO93/19976A1, cette position angulaire prédéfinie correspondant à l'extension maximale des manivelles peut être réglée manuellement par rotation du support d'excentrique autour de l'axe de rotation du pédalier. Cependant, cette opération de réglage est fastidieuse puisqu'elle nécessite le démontage puis le remontage du pédalier, et ne peut donc pas être effectuée par le cycliste lors du pédalage. En outre, étant donné que cette opération de réglage de la position angulaire du support d'excentrique est manuelle, elle ne permet pas un réglage de précision.

La présente invention vise à résoudre les inconvénients de l'état antérieur de la technique, en proposant un pédalier à manivelles extensibles comprenant un système intégré de réglage de décalage angulaire qui permet le réglage de la position angulaire des excentriques à laquelle les manivelles ont un déploiement maximal, ce qui permet un réglage aisé de cette position angulaire tout en pédalant. La présente invention a donc pour objet un pédalier à manivelles extensibles, caractérisé par le fait qu'il comprend : - un palier configuré pour faire partie d'un cadre de bicyclette ; - un boîtier de pédalier disposé dans le palier et dans lequel est monté un axe de pédalier de telle sorte que les deux extrémités de l'axe de pédalier débouchent respectivement des deux ouvertures du palier ; - un tube interne disposé à l'intérieur du palier, le boîtier de pédalier traversant le tube interne ; - un premier excentrique circulaire monté en rotation sur une première des deux extrémités de l'axe de pédalier et relié de manière fixe à une première des deux extrémités du tube interne ; - un second excentrique circulaire monté en rotation sur la seconde des deux extrémités de l'axe de pédalier et relié de manière fixe à la seconde des deux extrémités du tube interne, les premier et second excentriques ayant le même axe de révolution qui est décalé d'une distance prédéfinie par rapport à l'axe de pédalier ; - un premier ensemble manivelle comprenant un premier anneau monté en rotation autour du premier excentrique et un premier bras de manivelle s'étendant radialement depuis le premier anneau, des roulements étant disposés entre le premier excentrique et le premier anneau, le premier ensemble manivelle comprenant en outre un premier carter de manivelle relié de manière fixe à la première extrémité de l'axe de pédalier et logeant le premier excentrique, le premier anneau et le premier bras de manivelle, le premier carter de manivelle comprenant un premier bras creux dans lequel le premier bras de manivelle est inséré de manière coulissante et débouche de celui-ci ; - un second ensemble manivelle comprenant un second anneau monté en rotation autour du second excentrique et un second bras de manivelle s'étendant radialement depuis le second anneau, des roulements étant disposés entre le second excentrique et le second anneau, les premier et second bras de manivelle s'étendant dans la même direction dans des sens opposés, le second ensemble manivelle comprenant en outre un second carter de manivelle relié de manière fixe à la seconde extrémité de l'axe de pédalier et logeant le second excentrique, le second anneau et le second bras de manivelle, le second carter de manivelle comprenant un second bras creux dans lequel le second bras de manivelle est inséré de manière coulissante et débouche de celui-ci ; et - un système de réglage du décalage angulaire des premier et second excentriques autour de l'axe de pédalier, configuré pour régler, par rotation du tube interne à l'intérieur du palier, la position angulaire des premier et second excentriques autour de l'axe de pédalier à laquelle les premier et second bras de manivelle ont un déploiement maximal vis-à-vis respectivement des premier et second bras creux.

Ainsi, la position angulaire des excentriques à laquelle les manivelles ont un déploiement maximal peut facilement être réglée, à l'aide du système de réglage de décalage angulaire intégré au pédalier, sans avoir à démonter le pédalier, de manière à faciliter le passage du point mort du pédalier. En outre, ce réglage peut également être effectué tout en pédalant, de manière à pouvoir s'adapter à la pente sur laquelle le cycliste est en train de rouler. Le pédalier selon la présente invention peut être installé sur une bicyclette de type route, VTC (vélo tout chemin), VTT (vélo tout terrain), etc., et permet un gain de puissance appréciable en côte, faux-plat et vent de face, ce qui permet de réduire l'effort du cycliste.

Par palier (également appelé « boîte de pédalier »), on entend un élément de forme cylindrique creuse faisant partie, à la conception, d'un cadre de bicyclette.

Par tube interne, on entend un cylindre creux qui est interne au palier.

L'axe de révolution des excentriques circulaires est décalé (par exemple de 15 mm) par rapport à l'axe de pédalier du palier, la rotation du pédalage restant circulaire autour de l'axe de pédalier.

Le diamètre des excentriques peut, par exemple, être de 60 mm.

Pour chacun des premier et second ensembles manivelles, les roulements ménagés entre l'anneau et l'excentrique sont, de préférence, des rouleaux en cage disposés sur la périphérie de l'excentrique.

Pour chacun des premier et second ensembles manivelles, le bras de manivelle est inséré de manière coulissante dans le bras creux du carter de manivelle, de telle sorte que le pédalage entraîne la rotation du carter de manivelle autour de l'axe de pédalier et simultanément la rotation de l'anneau autour de l'excentrique. Etant donné que l'axe de pédalier et l'axe de révolution de l'excentrique sont décalés, lors de la rotation simultanée du carter de manivelle et de l'anneau, le bras de manivelle relié à l'anneau coulisse dans le bras creux du carter de manivelle, ce qui permet l'allongement puis la rétractation de la manivelle de manière cyclique au cours du pédalage. L'allongement de la manivelle est maximal au point mort haut (PMH, correspondant à la position angulaire des excentriques réglée à l'aide du système de réglage de décalage angulaire), puis la manivelle se rétracte en rotation jusqu'au point mort bas (PMB, qui est angulairement opposé au PMH) obtenant un retour à la longueur initiale de la manivelle. La garde au sol est ainsi préservée.

Lors du pédalage, les carters de manivelle sont ainsi en rotation autour de l'axe de pédalier, tandis que les anneaux (qui sont reliés aux bras de manivelle) sont en rotation autour des excentriques (c'est-à-dire, autour de l'axe de révolution des excentriques qui est décalé par rapport à l'axe de pédalier), de telle sorte que, vis-à-vis de l'axe de pédalier, la longueur de la manivelle est plus importante lorsque la manivelle est en position haute (à savoir au PMH, c'est-à-dire la position angulaire réglée à l'aide du système de réglage de décalage angulaire) que lorsque la manivelle est en position basse (à savoir le PMB). Ainsi, au PMH, le bras de manivelle sort du bras creux du carter de manivelle et la manivelle a une longueur maximale, tandis qu'au PMB, le bras de manivelle se rétracte et la manivelle a une longueur minimale.

Le pédalier selon la présente invention permet ainsi à la fois d'obtenir un PMH décalé angulairement et réglable (par exemple, à 5°, 10° ou 15° par rapport à la verticale) et un allongement des manivelles (par exemple de 30 mm) au PMH, permettant ainsi d'augmenter le levier de pédalage.

Le choix du diamètre des excentriques et le choix de l'entraxe entre l'axe de pédalier et l'axe de révolution des excentriques permettent de définir la valeur de l'extension maximale des manivelles au PMH. La longueur maximale de l'allongement peut, par exemple, être de 30 mm, mais pourrait également être inférieure ou supérieure à 30 mm en fonction du type de manivelles selon la bicyclette, sans s'écarter du cadre de la présente invention.

Le réglage du PMH du pédalier (par exemple, à 5°, 10° ou 15°) par décalage angulaire des excentriques autour de l'axe de pédalier permet de décaler angulairement l'axe de révolution des excentriques afin de décaler la position angulaire du pédalier dans laquelle l'extension des manivelles sera maximale. Ainsi, pour un réglage de PMH à 5°, 10° ou 15°, l'extension maximale de la manivelle sera atteinte lorsque la manivelle sera, respectivement, à une position angulaire de 5°, 10° ou 15° par rapport à la position verticale haute (0°) de la manivelle.

Selon un premier mode de réalisation de l'invention, un épaulement est formé autour de l'ouverture du palier côté premier excentrique, un trou oblong étant ménagé dans ledit épaulement, le système de réglage du décalage angulaire des premier et second excentriques comprenant : - un ressort de rappel disposé entre le tube interne et le palier ; - une tige de commande insérée dans le trou oblong de l'épaulement et dont la première extrémité est fixée au premier excentrique, le déplacement de la tige de commande dans le trou oblong provoquant le décalage angulaire du premier excentrique autour de l'axe de pédalier, entraînant un décalage angulaire identique du tube interne et du second excentrique ; - un câble dont l'une des extrémités est fixée à la seconde extrémité de la tige de commande ; et - un dispositif de réglage de tension de câble fixé à l'autre des extrémités du câble et configuré pour permettre le réglage de la tension du câble, de manière à régler la position angulaire des premier et second excentriques autour de l'axe de pédalier à laquelle les premier et second bras de manivelle ont un déploiement maximal vis-à-vis respectivement des premier et second bras creux.

Le pédalier comprend une partie gauche (à savoir, le premier excentrique et le premier ensemble manivelle) et une partie droite (à savoir, le second excentrique et le second ensemble manivelle), la partie gauche supportant la tige de commande relié au câble, et la partie droite supportant un ou plusieurs plateaux en prise avec une chaîne de bicyclette.

Le PMH du pédalier (c'est-à-dire, le décalage angulaire des excentriques auquel l'allongement des manivelles est maximal) est réglable par l'intermédiaire du câble à l'aide du dispositif de réglage de tension de câble qui peut être installé, par exemple, sur le guidon ou le cadre de la bicyclette.

Ainsi, lorsque le câble est tendu dans une certaine mesure à l'aide du dispositif de réglage de tension de câble, la tige de commande est déplacée dans le trou oblong de l'épaulement du palier, de telle sorte que le premier excentrique directement relié à la tige de commande est décalé angulairement autour de l'axe de pédalier. En outre, étant donné que les premier et second excentriques sont reliés l'un à l'autre par l'intermédiaire du tube interne dans le palier, la rotation du premier excentrique entraîne également la rotation du tube interne dans le palier et donc le même décalage angulaire du second excentrique.

Le ressort de rappel permet de ramener le tube interne et donc les deux excentriques à leurs positions de repos (c'est-à-dire au PMH de 0°) lorsque le câble est relâché (c'est-à-dire, lorsque la commande par câble n'est pas actionnée).

Le dimensionnement du trou oblong dans l'épaulement du palier permet ainsi de définir la course possible de la tige de commande (et donc le décalage angulaire possible pour les deux excentriques) en fonction de la tension sur le câble.

Le cycliste peut ainsi facilement modifier le réglage du PMH du pédalier (c'est-à-dire la position angulaire du pédalier à laquelle l'extension des manivelles sera maximale) par l'intermédiaire du dispositif de réglage de tension de câble, et cela même en roulant.

Le pédalier selon la présente invention permet, en cas d'avarie du boîtier d'axe, de remplacer ce dernier facilement sans démontage du tube interne et du ressort de rappel, préservant ainsi le réglage des excentriques. Le tube interne reste fiable, son déplacement angulaire étant faible, il ne peut se dérégler. Les excentriques ne sont soumis à aucune contrainte et sont réglés solidairement en synchronisme parfait. Ceci rend l'utilisation du pédalier sans soucis d'incident majeur. En effet, une casse du ressort laisserait le PMH sur le réglage en cours, et une rupture du câble entraînerait le retour par rappel du ressort au PMH de 0°.

Selon une caractéristique particulière de l'invention, la tige de commande est fixée au premier excentrique par l'intermédiaire d'un trou ménagé dans le premier excentrique et dans lequel l'extrémité correspondante de la tige de commande est emmanchée.

Ainsi, la tige de commande est reliée de manière fixe au premier excentrique, de telle sorte qu'un déplacement de la tige de commande dans le trou oblong de l'épaulement du palier permet un décalage angulaire correspondant du premier excentrique autour de l'axe de pédalier.

Selon une caractéristique particulière de l'invention, le ressort de rappel est un ressort de torsion disposé autour du tube interne, l'une des extrémités du ressort de torsion étant fixée au tube interne et l'autre extrémité du ressort de torsion étant fixée au palier.

Selon une caractéristique particulière de l'invention, le dispositif de réglage de tension de câble est une manette comprenant une pluralité de positions possibles, chaque position correspondant à une valeur particulière de décalage angulaire des premier et second excentriques. Ainsi, chaque position possible de la manette correspond à une tension particulière sur le câble correspondant à une position particulière de la tige de commande dans le trou oblong de l'épaulement du palier, cette position particulière correspondant à un décalage angulaire particulier des premier et second excentriques autour de l'axe de pédalier, ce qui permet ainsi de régler avec précision le PMH (à savoir, la position angulaire à laquelle l'allongement des manivelles est maximal) à l'aide du dispositif de réglage de tension de câble. Avantageusement, la manette possède seize positions correspondant à des décalages angulaires allant respectivement de 0° à 15°, par pas de 1°, par rapport à la verticale.

Ainsi, le cycliste peut, par exemple, régler le degré d'avance du PMH en fonction de la pente à gravir, de manière à ce que le PMH reste aligné avec l'aplomb vertical malgré la pente, ce qui permet au cycliste d'avoir à fournir moins d'efforts pour gravir la pente.

La manette graduée de 0° à 15°, de préférence placée à portée de main du cycliste, permet de régler avec précision au degré près le décalage angulaire des excentriques. Une graduation par cran à la manette renseignant le cycliste, chaque degré étant égal à 1 cran donnant 1° d'inclinaison aux excentriques, on obtient ainsi un réglage croissant de 0° à 15° (par rapport à la position verticale haute de la manivelle), le rappel se faisant à l'aide du ressort de rappel en mouvement décroissant de 15° à 0°, on a donc 16 positions possibles réversibles.

Selon un second mode de réalisation de l'invention, le système de réglage du décalage angulaire des premier et second excentriques comprend une masselotte fixée en partie inférieure du tube interne qui est monté libre en rotation dans le palier, de telle sorte que la masselotte agit comme un pendule provoquant un décalage angulaire du tube interne dans le palier lorsque ce dernier est incliné autour de son axe de révolution, entraînant un décalage angulaire identique des premier et second excentriques, de sorte que la position angulaire des premier et second excentriques autour de l'axe de pédalier, à laquelle les premier et second bras de manivelle ont un déploiement maximal, est automatiquement réglée à la position haute correspondant à l'aplomb vertical.

Ainsi, dans ce second mode de réalisation, l'ensemble masselotte-tube interne, agissant comme un pendule, permet le réglage automatique par gravité du décalage angulaire des excentriques en fonction de l'inclinaison de la pente sur laquelle se trouve la bicyclette (c'est-à-dire, de l'inclinaison du palier autour de son axe de révolution), de telle sorte que le déploiement maximal des premier et second bras de manivelle interviendra toujours à la position haute correspondant à l'aplomb vertical quelle que soit la pente sur laquelle se trouve le cycliste.

Le réglage du PMH est ainsi automatique, et le cycliste n'a pas à se préoccuper de celui-ci lorsqu'il pédale. Avantageusement, l'ensemble masselotte-tube interne est immergé dans un milieu visqueux contenu dans le palier, de manière à amortir l'oscillation du pendule. Le milieu visqueux peut, par exemple, être un bain d'huile ou un gel. Selon une caractéristique particulière de l'invention, chacun des premier et second excentriques est fixé à l'extrémité correspondante du tube interne par l'intermédiaire d'une tige de liaison respective dont l'une des extrémités est emmanchée dans un trou formé dans l'excentrique correspondant et dont l'autre des extrémités est emmanchée dans un trou formé dans un bossage ménagé sur l'extrémité correspondante du tube interne.

Par bossage, on entend une saillie ménagée sur l'extrémité correspondante du tube interne.

Ainsi, les deux tiges de liaison permettent de relier de manière fixe le tube interne aux premier et second excentriques, de telle sorte qu'un décalage angulaire du premier excentrique autour de l'axe de pédalier entraîne le même décalage angulaire du tube interne et du second excentrique autour de l'axe de pédalier.

Selon une caractéristique particulière de l'invention, le pédalier comprend en outre deux cuvettes montées respectivement sur les deux extrémités du boîtier de pédalier, les deux cuvettes étant disposées à l'intérieur du palier.

Les deux cuvettes sont ainsi entièrement intégrées dans le palier, et permettent de positionner l'axe de pédalier selon l'axe de révolution du palier.

Selon une caractéristique particulière de l'invention, chaque cuvette est montée à l'intérieur d'une bague respective disposée dans l'ouverture correspondante du palier, chaque bague comprenant un trou oblong traversé par la tige de liaison correspondante.

Ainsi, chaque cuvette est installée par vissage dans une bague, et cette même bague est installée par emmanchement serré dans l'extrémité correspondante du palier, de manière à positionner l'axe de pédalier selon l'axe de révolution du palier.

Avantageusement, une cannelure est formée sur la surface extérieure de la bague, et une rainure complémentaire est formée dans l'extrémité correspondante du palier, ladite rainure étant positionnée dans le palier de telle sorte que, lorsque la bague est installée dans le palier en insérant la cannelure dans la rainure, la position angulaire du trou oblong de la bague dans le palier est fixée, ce qui permet de fixer la position du PMH de 0° du pédalier.

Les trous oblongs formés dans les bagues permettent le passage des tiges de liaison à travers ceux-ci, et les tiges de liaison sont reliées au tube interne de manière à ce que le tube interne ait le même axe de révolution que le palier.

Avantageusement, les deux extrémités du tube interne sont respectivement montées en rotation dans les deux bagues à l'aide de roulements tels que des roulements à aiguilles. Selon une caractéristique particulière de l'invention, les premier et second bras de manivelle sont chacun dotés de roulements de manière à faciliter leur coulissement dans les premier et second bras creux.

Selon une caractéristique particulière de l'invention, des joints d'étanchéité sont disposés entre le premier carter de manivelle et le palier et entre le second carter de manivelle et le palier.

Ainsi, les joints d'étanchéité permettent de garantir l'étanchéité à l'intérieur des carters de manivelle, de manière à éviter que de l'eau, de la boue ou de la poussière ne rentre à l'intérieur de ceux-ci.

Il est à noter que des capuchons peuvent également être posés dans chaque orifice des carters de manivelle au niveau de l'axe de pédalier.

La présente invention a également pour objet une bicyclette comprenant un pédalier tel que décrit ci-dessus, le palier du pédalier faisant partie du cadre de la bicyclette. Selon une caractéristique particulière du premier mode de réalisation de l'invention, le dispositif de réglage de tension de câble est fixé sur l'un parmi le guidon de la bicyclette et l'un des tubes du cadre de la bicyclette. Ainsi, le dispositif de réglage de tension de câble est installé à portée de main du cycliste, de telle sorte que ce dernier peut facilement régler le PMH du pédalier tout en pédalant.

Pour mieux illustrer l'objet de la présente invention, on va en décrire ci-après, à titre illustratif et non limitatif, deux modes de réalisation préférés, avec référence aux dessins annexés.

Sur ces dessins :
[Fig. 1] est une vue en coupe du pédalier selon un premier mode de réalisation de la présente invention, le long de l'axe de pédalier ;
[Fig. 2] est une vue en coupe transversale du pédalier, selon le premier mode de réalisation, au niveau de son tube interne, sans les ensembles manivelles et l'axe de pédalier ;
[Fig. 3] est une vue éclatée partielle du pédalier de la Figure 1 ;
[Fig. 4] est une vue de face d'un excentrique du pédalier selon le premier mode de réalisation de la présente invention ;
[Fig. 5] est une vue de face d'un excentrique et d'un anneau d'ensemble manivelle du pédalier selon le premier mode de réalisation de la présente invention ;
[Fig. 6] est une vue de face d'une bague du pédalier selon le premier mode de réalisation de la présente invention ;
[Fig. 7] est une vue de face du second ensemble manivelle installé sur le second excentrique du pédalier selon le premier mode de réalisation de la présente invention, en position déployée ;
[Fig. 8] est une vue de face du premier ensemble manivelle installé sur le premier excentrique du pédalier selon le premier mode de réalisation de la présente invention, en position rétractée ;
[Fig. 9] est une vue en coupe représentant les étapes de montage d'un excentrique et d'un ensemble manivelle du pédalier selon le premier mode de réalisation de la présente invention ;
[Fig. 10a] est une vue schématique représentant la rotation des manivelles du pédalier pour un PMH réglé à 0° ;
[Fig. 10b] est une vue schématique représentant la rotation des manivelles du pédalier pour un PMH réglé à 5° ;
[Fig. 10c] est une vue schématique représentant la rotation des manivelles du pédalier pour un PMH réglé à 10° ;
[Fig. 10d] est une vue schématique représentant la rotation des manivelles du pédalier pour un PMH réglé à 15° ;
[Fig. 11a] est une vue de côté d'une bicyclette sur laquelle est installé un pédalier selon le premier mode de réalisation de la présente invention, sur une route sans pente, avec un PMH de pédalier réglé à 0° ;
[Fig. 11b] est une vue de côté de la bicyclette de la Figure 11a, sur une route ayant une pente à 10°, avec un PMH de pédalier réglé à 10° ;
[Fig. 12] est une vue de côté du cadre de la bicyclette de la Figure 11a ;
[Fig. 13] est une vue en perspective d'une masselotte d'un pédalier selon un second mode de réalisation de la présente invention ;
[Fig. 14] est une vue partielle en coupe transversale d'un pédalier selon le second mode de réalisation de la présente invention ;
[Fig. 15] est une vue partielle en coupe longitudinale du pédalier de la Figure 14 ; et
[Fig. 16] est une vue éclatée de la Figure 15 sur laquelle les deux excentriques, les deux cuvettes et les deux tiges de liaison ont été ajoutés.

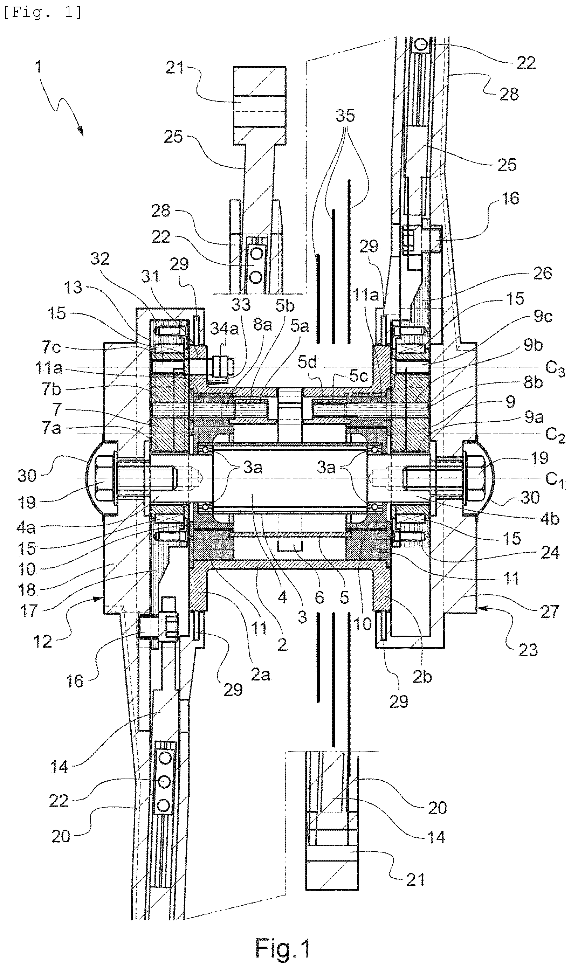

Si l'on se réfère aux Figures 1 à 9, on peut voir qu'il y est représenté un pédalier à manivelles extensibles 1 selon un premier mode de réalisation de la présente invention.

Le pédalier 1 comprend un palier 2 configuré pour faire partie d'un cadre de bicyclette, le palier 2 ayant une forme cylindrique creuse.

Le pédalier 1 comprend en outre un boîtier de pédalier 3 (ayant une forme cylindrique creuse) disposé dans le palier 2 et dans lequel est monté un axe de pédalier 4 de telle sorte que les deux extrémités 4a et 4b de l'axe de pédalier 4 débouchent respectivement des deux ouvertures du palier 2.

Des roulements 3a sont disposés entre chacune des deux extrémités 4a et 4b de l'axe de pédalier 4 et le boîtier de pédalier 3, de telle sorte que l'axe de pédalier 4 est monté rotatif dans le boîtier de pédalier 3.

Le pédalier 1 comprend en outre un tube interne 5 (ayant une forme cylindrique creuse) disposé à l'intérieur du palier 2, le boîtier de pédalier 3 traversant le tube interne 5, un ressort de rappel 6 étant disposé entre le tube interne 5 et le palier 2.

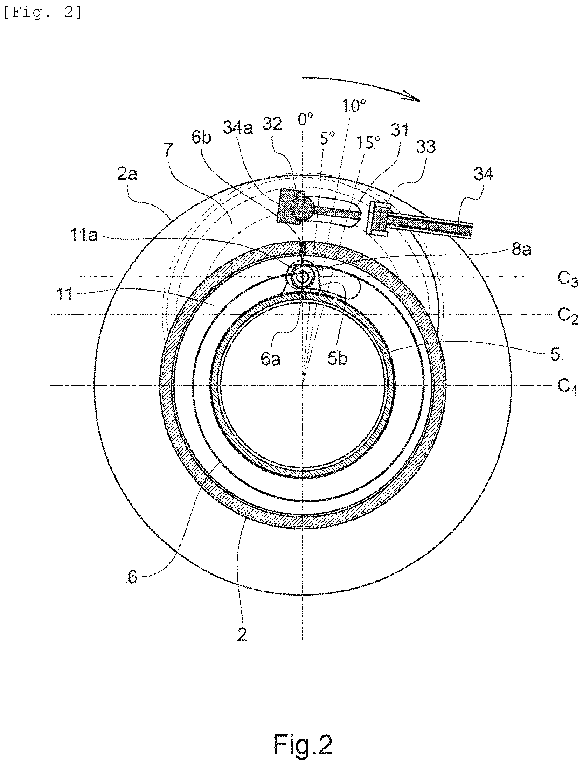

Tel que représenté à la Figure 2, le ressort de rappel 6 est un ressort de torsion disposé autour du tube interne 5, l'une 6a des extrémités du ressort de torsion 6 étant fixée au tube interne 5 et l'autre extrémité 6b du ressort de torsion 6 étant fixée au palier 2.

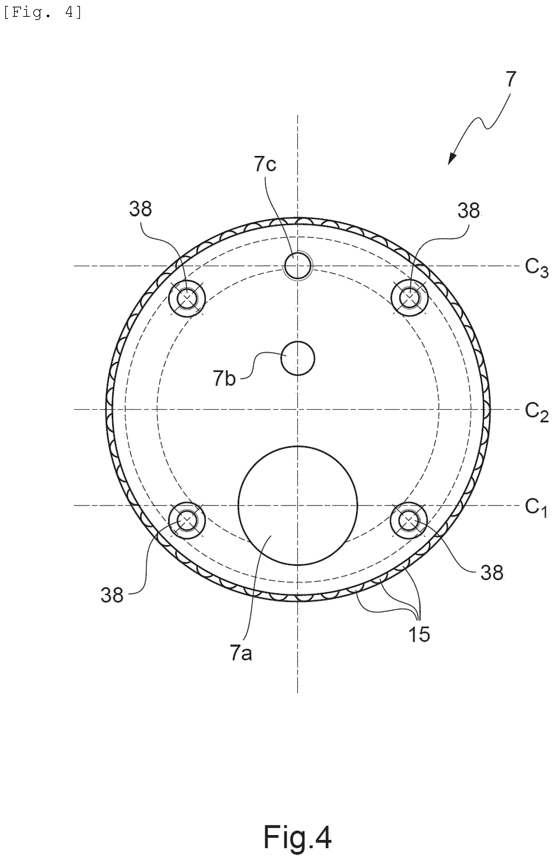

Le pédalier 1 comprend en outre un premier excentrique 7 circulaire (représenté en particulier à la Figure 4) monté en rotation sur la première 4a des deux extrémités de l'axe de pédalier 4 et relié de manière fixe au tube interne 5 par l'intermédiaire d'une première tige de liaison 8a.

En particulier, le premier excentrique 7 comprend un premier trou 7a dans lequel est insérée en rotation la première extrémité 4a de l'axe de pédalier 4, et un second trou 7b dans lequel est emmanchée l'une des extrémités de la première tige de liaison 8a. L'autre extrémité de la première tige de liaison 8a est emmanchée dans un trou 5a formé dans un bossage 5b ménagé sur l'extrémité correspondante du tube interne 5.

Le pédalier 1 comprend en outre un second excentrique 9 circulaire monté en rotation sur la seconde 4b des deux extrémités de l'axe de pédalier 4 et relié de manière fixe au tube interne 5 par l'intermédiaire d'une seconde tige de liaison 8b.

En particulier, le second excentrique 9 comprend un premier trou 9a dans lequel est insérée en rotation la seconde extrémité 4b de l'axe de pédalier 4, et un second trou 9b dans lequel est emmanchée l'une des extrémités de la seconde tige de liaison 8b. L'autre extrémité de la seconde tige de liaison 8b est emmanchée dans un trou 5c formé dans un bossage 5d ménagé sur l'extrémité correspondante du tube interne 5.

Les premier et second excentriques 7 et 9 ont le même axe de révolution C2 qui est décalé d'une distance prédéfinie par rapport à l'axe de révolution C1 du palier 2 (correspondant à l'axe de pédalier 4).

Les deux tiges de liaison 8a et 8b permettent de relier de manière fixe le tube interne 5 aux premier et second excentriques 7 et 9, de telle sorte qu'un décalage angulaire du premier excentrique 7 autour de l'axe de pédalier 4 entraîne le même décalage angulaire du tube interne 5 et du second excentrique 9 autour de l'axe de pédalier 4.

Le pédalier 1 comprend en outre deux cuvettes 10 montées respectivement sur les deux extrémités du boîtier de pédalier 3, les deux cuvettes 10 étant disposées à l'intérieur du palier 2.

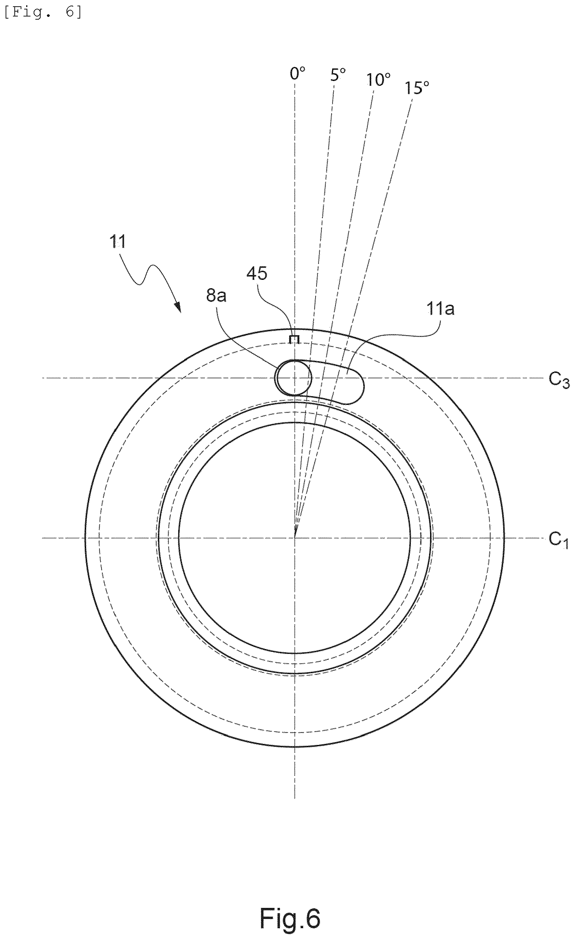

Chaque cuvette 10 est montée à l'intérieur d'une bague 11 respective (représentée en particulier à la Figure 6) disposée dans l'ouverture correspondante du palier 2, chaque bague 11 comprenant un trou oblong 11a traversé par la tige de liaison 8a, 8b correspondante, ledit trou oblong 11a étant incurvé selon un arc de cercle centré sur l'axe de révolution C1.

Ainsi, chaque cuvette 10 est installée par vissage dans une bague 11, et cette même bague 11 est installée par emmanchement en force dans l'extrémité correspondante du palier 2 de manière à positionner l'axe de pédalier 4 selon l'axe de révolution C1 du palier 2.

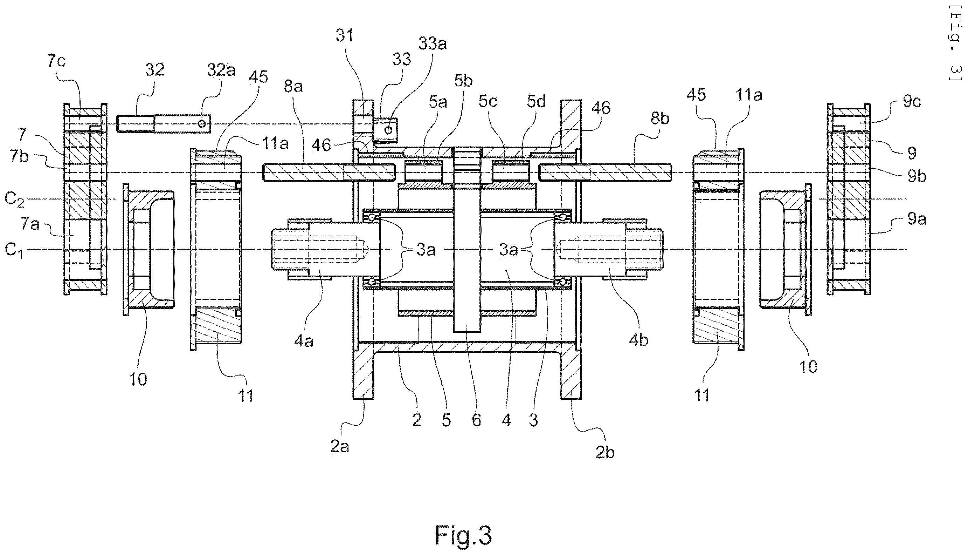

Une cannelure 45 (visible sur la Figure 3) est formée sur la surface extérieure de la bague 11, et une rainure complémentaire 46 (visible sur la Figure 3) est formée dans l'extrémité correspondante du palier 2, ladite rainure 46 étant positionnée dans le palier 2 de telle sorte que, lorsque la bague 11 est installée dans le palier 2 en insérant la cannelure 45 dans la rainure 46, la position angulaire du trou oblong 11a de la bague 11 dans le palier 2 est fixée, ce qui permet de fixer la position du PMH de 0° du pédalier 1.

Les trous oblongs 11a formés dans les bagues 11 permettent le passage des tiges de liaison 8a, 8b à travers ceux-ci, et les tiges de liaison 8a, 8b sont reliées au tube interne 5 de manière à ce que le tube interne 5 ait le même axe de révolution C1 que le palier 2.

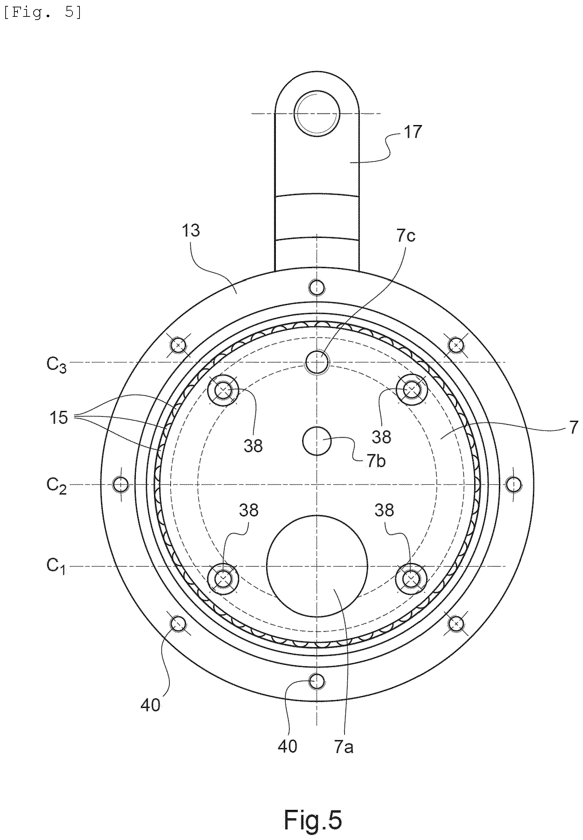

Le pédalier 1 comprend en outre un premier ensemble manivelle 12 comprenant un premier anneau 13 (représenté en particulier à la Figure 5) monté en rotation autour du premier excentrique 7 et un premier bras de manivelle 14 s'étendant radialement depuis le premier anneau 13, des roulements 15 (tels que des rouleaux en cage) étant disposés entre le premier excentrique 7 et le premier anneau 13.

En particulier, le premier bras de manivelle 14 est fixé, à l'aide d'une vis 16, à une extension 17 s'étendant radialement depuis le premier anneau 13.

Le premier ensemble manivelle 12 comprend en outre un premier carter de manivelle 18 relié de manière fixe, à l'aide d'une vis 19, à la première extrémité 4a de l'axe de pédalier 4 et logeant le premier excentrique 7, le premier anneau 13 et le premier bras de manivelle 14.

Le premier carter de manivelle 18 comprend un premier bras creux 20 dans lequel le premier bras de manivelle 14 est inséré de manière coulissante et débouche de celui-ci, l'extrémité libre du premier bras de manivelle 14 possédant un trou traversant 21 permettant la fixation d'une première pédale (non représentée) sur le premier bras de manivelle 14.

Le premier bras de manivelle 14 est doté de roulements 22 permettant de faciliter le coulissement du premier bras de manivelle 14 dans le premier bras creux 20 du premier carter de manivelle 18.

Le pédalier 1 comprend en outre un second ensemble manivelle 23 comprenant un second anneau 24 monté en rotation autour du second excentrique 9 et un second bras de manivelle 25 s'étendant radialement depuis le second anneau 24, des roulements 15 (tels que des rouleaux en cage) étant disposés entre le second excentrique 9 et le second anneau 24.

En particulier, le second bras de manivelle 25 est fixé, à l'aide d'une vis 16, à une extension 26 s'étendant radialement depuis le second anneau 24.

Les premier et second bras de manivelle 14 et 25 sont agencés de manière à s'étendre dans la même direction mais dans des sens opposés.

Le second ensemble manivelle 23 comprend en outre un second carter de manivelle 27 relié de manière fixe, à l'aide d'une vis 19, à la seconde extrémité 4b de l'axe de pédalier 4 et logeant le second excentrique 9, le second anneau 24 et le second bras de manivelle 25.

Le second carter de manivelle 27 comprend un second bras creux 28 dans lequel le second bras de manivelle 25 est inséré de manière coulissante et débouche de celui-ci, l'extrémité libre du second bras de manivelle 25 possédant un trou traversant 21 permettant la fixation d'une seconde pédale (non représentée) sur le second bras de manivelle 25.

Le second bras de manivelle 25 est doté de roulements 22 permettant de faciliter le coulissement du second bras de manivelle 25 dans le second bras creux 28 du second carter de manivelle 27.

Des joints d'étanchéité 29 sont disposés entre le premier carter de manivelle 18 et le palier 2 et entre le second carter de manivelle 27 et le palier 2, et des capuchons 30 sont posés sur les deux carters de manivelle 18, 27 au niveau des vis 19, pour garantir l'étanchéité à l'intérieur des carters de manivelle 18 et 27, de manière à éviter que de l'eau, de la boue ou de la poussière ne rentre à l'intérieur de ceux-ci.

Un épaulement 2a est formé autour de l'ouverture du palier 2 côté premier excentrique 7, et une autre épaulement 2b est formé autour de l'ouverture du palier 2 côté second excentrique 9.

Un trou oblong 31, qui est incurvé selon un arc de cercle centré sur l'axe de révolution C1, est ménagé en partie supérieure de l'épaulement 2a côté premier excentrique 7. Une tige de commande 32 (faisant partie d'un système de réglage de décalage angulaire) est insérée dans le trou oblong 31 de l'épaulement 2a, l'une des extrémités de la tige de commande 32 étant emmanchée dans un troisième trou 7c ménagé dans le premier excentrique 7 de telle sorte que la tige de commande 32 est fixée au premier excentrique 7. La tige de commande 32 s'étend selon un axe C3 parallèle aux axes C1 et C2 et à l'axe de pédalier 4.

Le déplacement de la tige de commande 32 dans le trou oblong 31 de l'épaulement 2a du palier 2 entraîne ainsi un décalage angulaire du premier excentrique 7 autour de l'axe de pédalier 4, entraînant également un décalage angulaire similaire du tube interne 5 et du second excentrique 9. L'autre extrémité de la tige de commande 32 possède un trou traversant 32a, et une butée 33 possédant également un trou traversant 33a est formé sur l'épaulement 2a du palier 2 à l'opposé du premier excentrique 7.

Un câble 34 (représenté en particulier à la Figure 2, et faisant partie du système de réglage de décalage angulaire) passe à travers le trou traversant 33a de la butée 33 et le trou traversant 32a de la tige de commande 32, et un arrêtoir 34a est fixé à l'une des extrémités du câble 34 de telle sorte que ladite extrémité du câble 34 est reliée à la tige de commande 32 et permet d'entraîner cette dernière en déplacement dans le trou oblong 31.

Le pédalier 1 comprend en outre un dispositif de réglage de tension de câble (non représenté sur les Figures 1 à 9, et faisant partie du système de réglage de décalage angulaire) fixé à l'autre des extrémités du câble 34 et configuré pour permettre le réglage de la tension du câble 34, de manière à régler la position angulaire des premier et second excentriques 7 et 9 autour de l'axe de pédalier 4 à laquelle les premier et second bras de manivelle 14 et 25 ont un déploiement maximal vis-à-vis respectivement des premier et second bras creux 20 et 28.

Le cycliste peut ainsi facilement régler, à l'aide du dispositif de réglage de tension de câble, sans avoir à démonter le pédalier 1, la position angulaire des premier et second excentriques 7 et 9 à laquelle les ensembles manivelles 12 et 23 ont un déploiement maximal, de manière à faciliter le passage du point mort haut du pédalier 1. L'axe de révolution C2 des excentriques 7 et 9 peut, par exemple, être décalé de 15 mm par rapport à l'axe de révolution C1 du palier 2, la rotation du pédalage restant circulaire autour de l'axe de pédalier 4. En outre, le diamètre des premier et second excentriques 7 et 9 peut, par exemple, être de 60 mm. Toutefois, le décalage entre C1 et C2 et le diamètre des excentriques 7 et 9 pourraient également prendre de quelconques autres valeurs, sans s'écarter du cadre de la présente invention.

Etant donné que, dans chacun des premier et second ensembles manivelles 12 et 23, le bras de manivelle 14, 25 est inséré de manière coulissante dans le bras creux 20, 28 du carter de manivelle 18, 27, le pédalage entraîne la rotation du premier carter de manivelle 18 selon l'axe de pédalier 4 et simultanément la rotation du premier anneau 13 autour du premier excentrique 7, et également la rotation du second carter de manivelle 27 selon l'axe de pédalier 4 et simultanément la rotation du second anneau 24 autour du second excentrique 9. En outre, étant donné que l'axe de pédalier 4 et l'axe de révolution C2 des excentriques 7 et 9 sont décalés, lors de la rotation simultanée du carter de manivelle 18, 27 et de l'anneau 13, 24, le bras de manivelle 14, 25 relié à l'anneau 13, 24 coulisse dans le bras creux 20, 28 du carter de manivelle 18, 27, ce qui permet l'allongement puis la rétractation de la manivelle (par exemple, de 30 mm dans ce premier mode de réalisation particulier) de manière cyclique au cours du pédalage. L'allongement de la manivelle est maximal au point mort haut (PMH, correspondant à la position angulaire des excentriques 7 et 9 réglée à l'aide du dispositif de réglage de tension de câble), puis la manivelle se rétracte en rotation jusqu'au point mort bas (PMB, qui est angulairement opposé au PMH) obtenant un retour à la longueur initiale de la manivelle.

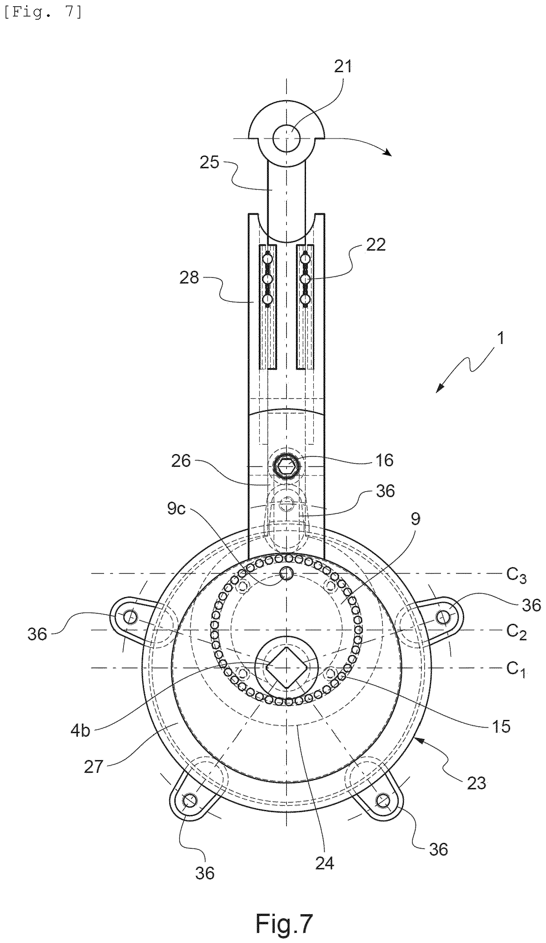

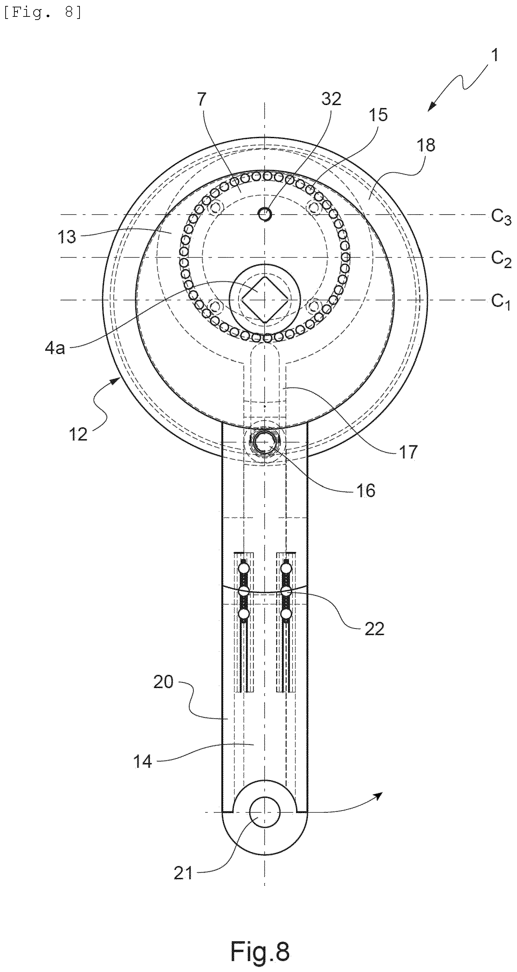

Lors du pédalage, les carters de manivelle 18, 27 sont ainsi en rotation avec l'axe de pédalier 4, tandis que les anneaux 13, 24 (qui sont reliés aux bras de manivelle 14, 25) sont en rotation autour des excentriques 7 et 9 (c'est-à-dire, autour de l'axe de révolution C2 des excentriques 7 et 9 qui est décalé par rapport à l'axe de pédalier 4), de telle sorte que, vis-à-vis de l'axe de pédalier 4, la longueur de la manivelle est plus importante lorsque la manivelle est en position haute (comme le second ensemble manivelle 23 aux Figures 1 et 7) que lorsque la manivelle est en position basse (comme le premier ensemble manivelle 12 aux Figures 1 et 8).

Le pédalier 1 selon la présente invention permet ainsi à la fois d'obtenir un PMH décalé angulairement et réglable (par exemple, à 0°, 5°, 10° ou 15° par rapport à la verticale, comme représenté sur les Figures 2 et 6) et un allongement des manivelles au PMH, permettant ainsi d'augmenter le levier de pédalage.

Le choix du diamètre des excentriques 7 et 9 et le choix de l'entraxe entre l'axe de pédalier 4 et l'axe de révolution C2 des excentriques 7 et 9 permettent de définir la valeur de l'extension maximale des manivelles au PMH. La longueur maximale de l'allongement peut, par exemple, être de 30 mm dans ce premier mode de réalisation particulier, mais pourrait également être inférieure ou supérieure à 30 mm en fonction du type de manivelles selon la bicyclette, sans s'écarter du cadre de la présente invention.

La partie droite du pédalier 1 (à savoir, le second excentrique 9 et le second ensemble manivelle 23) supporte plusieurs plateaux 35 (représentés à la Figure 1), l'un des plateaux 35 étant en prise avec une chaîne de bicyclette (non représentée). Les plateaux 35 sont reliés au second carter de manivelle 27 à l'aide de cinq fixations 36 (représentées à la Figure 7).

Le réglage du PMH du pédalier 1 (par exemple, à 0°, 5°, 10° ou 15°) par décalage angulaire des excentriques 7 et 9 autour de l'axe de pédalier 4 permet de décaler angulairement l'axe de révolution C2 des excentriques 7 et 9 afin de décaler la position angulaire du pédalier 1 dans laquelle l'extension des manivelles sera maximale. Ainsi, pour un réglage de PMH à 0°, 5°, 10° ou 15°, l'extension maximale de la manivelle sera atteinte lorsque la manivelle sera, respectivement, à une position angulaire de 0°, 5°, 10° ou 15° par rapport à la position verticale haute (0°) de la manivelle.

Lorsque le câble 34 est tendu dans une certaine mesure à l'aide du dispositif de réglage de tension de câble, la tige de commande 32 est déplacée dans le trou oblong 31 de l'épaulement 2a du palier 2, de telle sorte que le premier excentrique 7 directement relié à la tige de commande 32 est décalé angulairement autour de l'axe de pédalier 4. En outre, étant donné que les premier et second excentriques 7 et 9 sont reliés l'un à l'autre par l'intermédiaire du tube interne 5 dans le palier 2, la rotation du premier excentrique 7 entraîne également la rotation du tube interne 5 dans le palier 2 et donc le même décalage angulaire du second excentrique 9.

Le ressort de rappel 6 permet de ramener le tube interne 5 et donc les deux excentriques 7 et 9 à leurs positions de repos (c'est-à-dire au PMH de 0°) lorsque le câble 34 est relâché (c'est-à-dire, lorsque la commande par câble n'est pas actionnée).

Le dimensionnement du trou oblong 31 dans l'épaulement 2a du palier 2 permet ainsi de définir la course possible de la tige de commande 32 (et donc le décalage angulaire possible pour les deux excentriques 7 et 9) en fonction de la tension sur le câble 34.

Le cycliste peut ainsi facilement modifier le réglage du PMH du pédalier 1 (c'est-à-dire la position angulaire du pédalier à laquelle l'extension des manivelles sera maximale) par l'intermédiaire du dispositif de réglage de tension de câble, et cela même en roulant.

L'utilisation du pédalier 1 selon la présente invention peut se faire sans soucis d'incident majeur. En effet, une casse du ressort de rappel 6 laisserait le PMH sur le réglage en cours, et une rupture du câble 34 entraînerait le retour par rappel du ressort 6 au PMH de 0°.

La Figure 7 représente la partie droite du pédalier 1 lorsque le PMH est réglé à 0° et que le second bras de manivelle 25 est situé au PMH de 0° (c'est-à-dire, en position verticale haute), l'allongement du second ensemble manivelle 23 étant alors maximal.

La Figure 8 représente la partie gauche du pédalier 1 lorsque le PMH est réglé à 0° et que le premier bras de manivelle 14 est situé au PMB de 180° (c'est-à-dire, en position vertical basse), l'allongement du premier ensemble manivelle 12 étant alors minimal.

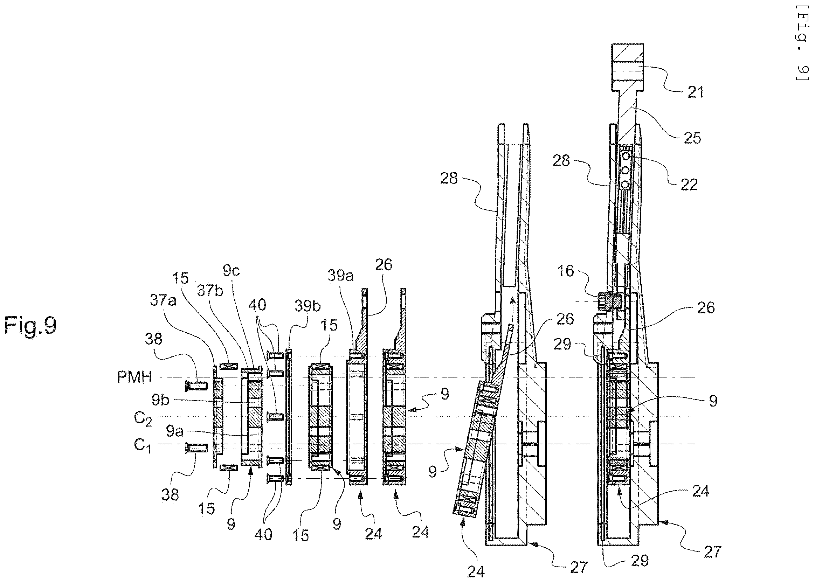

La Figure 9 représente les différentes étapes de montage du second excentrique 9 et du second ensemble manivelle 23 du pédalier 1 selon le premier mode de réalisation de la présente invention.

Le second excentrique 9 est constitué de deux parties 37a et 37b assemblées ensemble, à l'aide de vis 38, de manière à maintenir les roulements 15 entre celles-ci.

Il est à noter que les premier et second excentriques 7 et 9 étant identiques, le second excentrique 9 comprend également un troisième trou 9c. Cependant, ce troisième trou 9c n'est pas utilisé dans le cas du second excentrique 9 et pourrait également être omis, sans s'écarter du cadre de la présente invention.

Lorsque les excentriques 7 et 9 sont identiques (c'est-à-dire, lorsqu'ils comprennent chacun un troisième trou 9c), dans le cas où le cycliste doive démonter puis remonter le pédalier 1, chaque excentrique 7, 9 pourra être monté indifféremment sur la partie gauche ou la partie droite du pédalier 1, de telle sorte qu'un repérage des excentriques 7, 9 ne sera pas nécessaire.

Le second anneau 24 est également constitué de deux parties 39a et 39b. Le second excentrique 9 assemblé avec les roulements 15 est d'abord inséré dans la première partie 39a du second anneau 24, puis les deux parties 39a et 39b du second anneau 24 sont assemblées ensemble à l'aide de vis 40, de manière à maintenir le second excentrique 9 à l'intérieur du second anneau 24.

L'ensemble ainsi constitué du second excentrique 9 et du second anneau 24 est ensuite inséré dans le second carter de manivelle 27 en alignant le premier trou 9a du second excentrique 9 avec l'axe C1 (correspondant à l'axe de pédalier 4), puis le second bras de manivelle 25 est inséré dans le second bras creux 28 du second carter de manivelle 27 puis fixé à l'extension 26 du second anneau 24 à l'aide de la vis 16.

L'ensemble ainsi formé peut ensuite être monté sur l'axe de pédalier 4 du pédalier 1.

Il est à noter que les étapes de montage du premier excentrique 7 et du premier ensemble manivelle 12 sont similaires aux étapes décrites ci-dessus en référence au second excentrique 9 et au second ensemble manivelle 23.

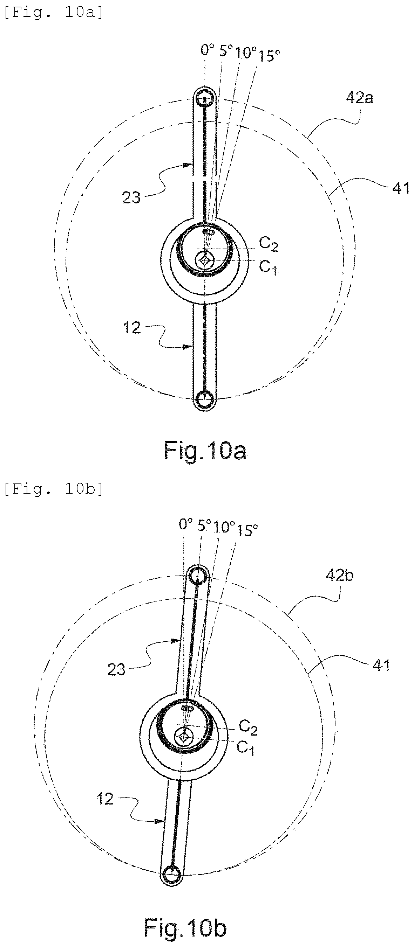

Si l'on se réfère aux Figures 10a à 10d, on peut voir qu'il y est représenté les trajectoires du pédalier 1 pour différents réglages de PMH (à savoir, 0°, 5°, 10° et 15°). La trajectoire circulaire 41 sur les Figures 10a à 10d représente la trajectoire que les manivelles en rotation prendraient dans le cas où elles ne seraient pas extensibles.

La trajectoire circulaire 42a sur la Figure 10a représente la trajectoire des ensembles manivelles 12 et 23 du pédalier 1 en rotation selon la présente invention pour un réglage de PMH de 0° à l'aide du dispositif de réglage de tension de câble. La longueur des manivelles est alors maximale à 0° et minimale à 180° (par rapport à la position verticale haute).

La trajectoire circulaire 42b sur la Figure 10b représente la trajectoire des ensembles manivelles 12 et 23 du pédalier 1 en rotation selon la présente invention pour un réglage de PMH de 5° à l'aide du dispositif de réglage de tension de câble. La longueur des manivelles est alors maximale à 5° et minimale à 185° (par rapport à la position verticale haute).

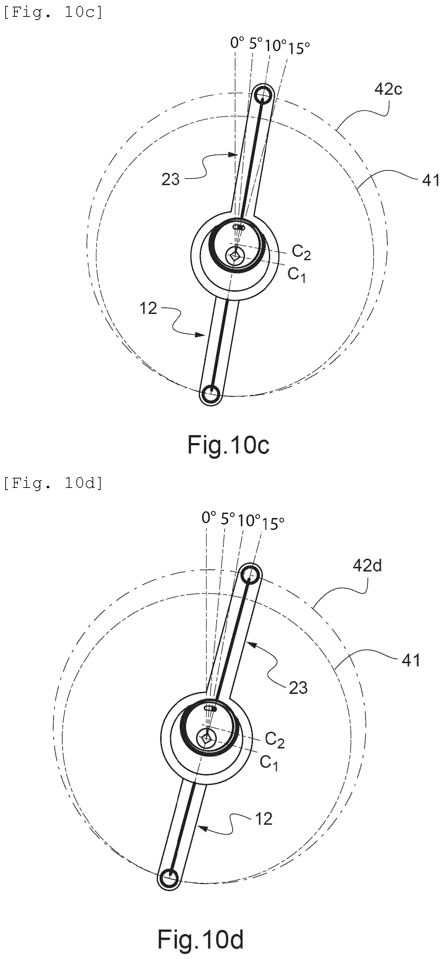

La trajectoire circulaire 42c sur la Figure 10c représente la trajectoire des ensembles manivelles 12 et 23 du pédalier 1 en rotation selon la présente invention pour un réglage de PMH de 10° à l'aide du dispositif de réglage de tension de câble. La longueur des manivelles est alors maximale à 10° et minimale à 190° (par rapport à la position verticale haute).

La trajectoire circulaire 42d sur la Figure 10d représente la trajectoire des ensembles manivelles 12 et 23 du pédalier 1 en rotation selon la présente invention pour un réglage de PMH de 15° à l'aide du dispositif de réglage de tension de câble. La longueur des manivelles est alors maximale à 15° et minimale à 195° (par rapport à la position verticale haute).

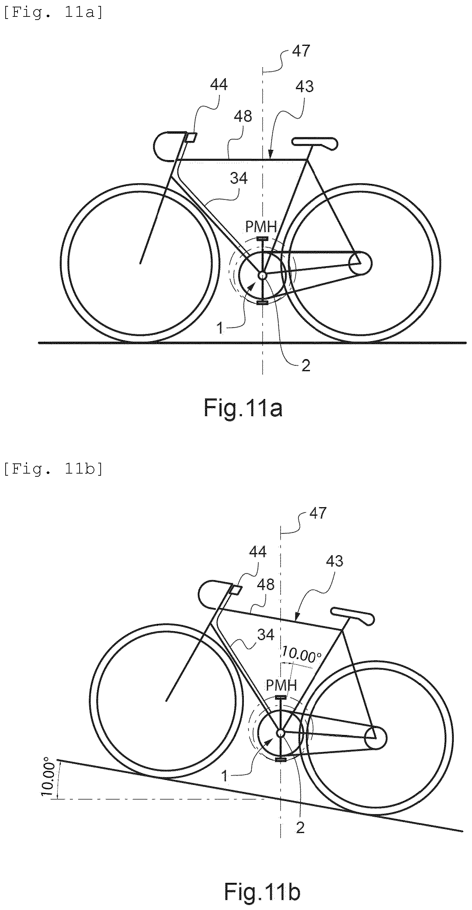

Si l'on se réfère aux Figures 11a et 11b, on peut voir qu'il y est représenté une bicyclette 43 comprenant le pédalier 1 selon le premier mode de réalisation de la présente invention, le palier 2 du pédalier 1 faisant partie du cadre 48 de la bicyclette 43.

La bicyclette 43 peut être de type route, VTC (vélo tout chemin), VTT (vélo tout terrain), etc.

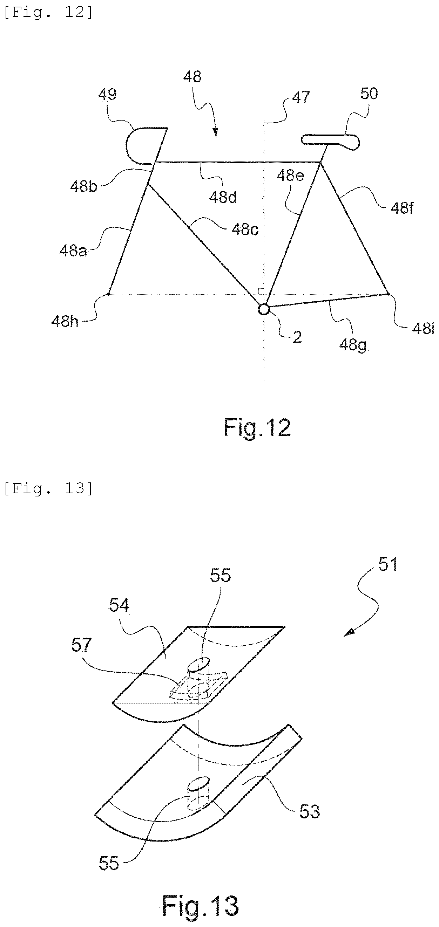

La Figure 12 représente en particulier le cadre 48 de la bicyclette 43. Le cadre 48 comprend, de façon connue, une fourche 48a, un tube de direction 48b sur lequel est monté un guidon 49, un tube diagonale 48c, un tube horizontal 48d, un tube de selle 48e sur lequel est montée une selle 50, des haubans 48f, des bases 48g, une patte de fixation avant 48h, une patte de fixation arrière 48i et le palier 2 du pédalier 1, ledit palier 2 étant solidarisé par soudure au tube diagonale 48c, au tube de selle 48e et aux deux bases 48g.

Il est à noter que la rainure 46 formée dans le palier 2 est positionnée à 90° de la ligne d'axe des pattes de fixation avant et arrière (c'est-à-dire, alignée sur l'aplomb vertical 47 lorsque ladite ligne d'axe est horizontale) pour obtenir le point 0° du réglage des excentriques 7 et 9, les bagues 11 pouvant ainsi être calées par les cannelures 45 au PMH de 0°.

Comme représenté sur les Figures 11a et 11b, le dispositif de réglage de tension de câble 44 du pédalier 1, qui est relié au câble 34 et permet de régler la tension de ce dernier, est fixé sur le guidon de la bicyclette 43, mais pourrait également être fixé sur l'un des tubes du cadre 48 de la bicyclette 43, sans s'écarter du cadre de la présente invention.

Le dispositif de réglage de tension de câble 44 est ainsi installé à portée de main du cycliste, de telle sorte que ce dernier peut facilement régler le PMH du pédalier 1 tout en pédalant.

Le PMH du pédalier (c'est-à-dire, le décalage angulaire des excentriques 7 et 9 auquel l'allongement des manivelles est maximal) est réglable par l'intermédiaire du câble 34 à l'aide du dispositif de réglage de tension de câble 44.

Le pédalier 1 selon la présente invention permet ainsi un gain de puissance appréciable en côte, faux-plat et vent de face, ce qui permet de réduire l'effort du cycliste.

Le dispositif de réglage de tension de câble 44 peut, par exemple, être une manette comprenant une pluralité de positions possibles, chaque position correspondant à une valeur particulière de décalage angulaire des premier et second excentriques 7 et 9. Chaque position possible de la manette correspond ainsi à une tension particulière sur le câble 34 correspondant à une position particulière de la tige de commande 32 dans le trou oblong 31 de l'épaulement 2a du palier 2, cette position particulière correspondant à un décalage angulaire particulier des premier et second excentriques 7 et 9 autour de l'axe de pédalier 4, ce qui permet ainsi de régler avec précision le PMH (à savoir, la position angulaire à laquelle l'allongement des manivelles est maximal) à l'aide du dispositif de réglage de tension de câble 44.

La manette peut, par exemple, avoir seize positions correspondant à des décalages angulaires allant respectivement de 0° à 15°, par pas de 1°, par rapport à la verticale.

Ainsi, le cycliste peut, par exemple, régler le degré d'avance du PMH en fonction de la pente à gravir, de manière à ce que le PMH reste aligné avec l'aplomb vertical 47 malgré la pente, ce qui permet au cycliste d'avoir à fournir moins d'efforts pour gravir la pente.

Par exemple, sur la Figure 11a, la bicyclette 43 se déplace sur une route sans pente, de telle sorte que le cycliste peut régler le PMH du pédalier 1 à 0° de manière à ce que l'allongement des manivelles soit maximal à 0°.

Par contre, sur la Figure 11b, la bicyclette 43 se déplace une route en pente, à titre d'exemple avec une pente à 10°, de telle sorte que le cycliste peut régler, à l'aide du dispositif de réglage de tension de câble 44, le PMH du pédalier 1 de manière à s'adapter à la pente (ici avec un réglage du PMH à 10°), de manière à ce que l'allongement des manivelles soit maximal à 10° (c'est-à-dire, à la position angulaire correspondant à l'aplomb vertical 47). La manette graduée de 0° à 15° permet de régler avec précision au degré près le décalage angulaire des excentriques 7 et 9. Une graduation par cran à la manette renseignant le cycliste, chaque degré étant égal à 1 cran donnant 1° d'inclinaison aux excentriques 7 et 9, un réglage croissant de 0° à 15° (par rapport à la position verticale haute de la manivelle) est ainsi obtenu, le rappel se faisant à l'aide du ressort de rappel 6 en mouvement décroissant de 15° à 0°, la manette ayant donc seize positions possibles réversibles.

Il est à noter qu'un inclinomètre pourrait également être monté sur la bicyclette 43 afin de permettre au cycliste de connaître la valeur de la pente sur laquelle il roule puis de régler en conséquence la manette du dispositif de réglage de tension de câble 44.

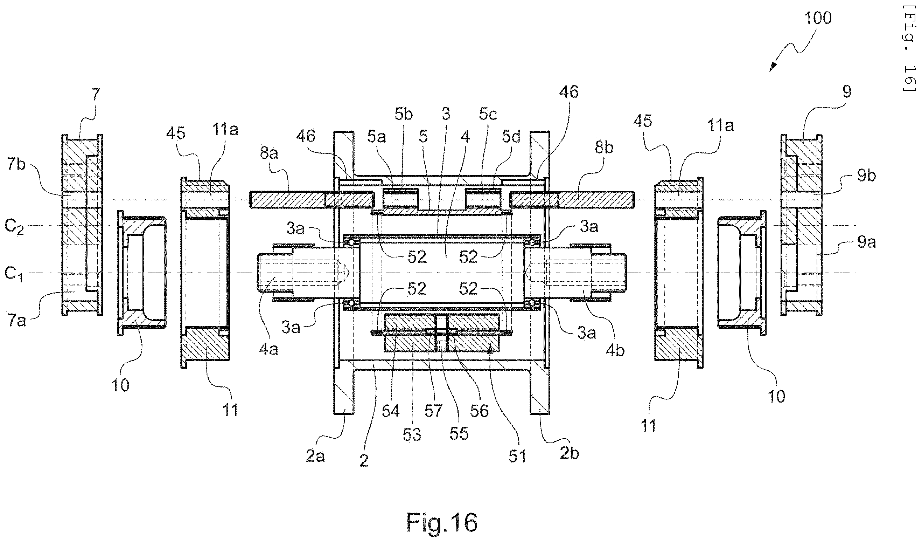

Si l'on se réfère aux Figures 13 à 16, on peut voir qu'il y est représenté un pédalier à manivelles extensibles 100 selon un second mode de réalisation de la présente invention.

Les éléments communs entre le premier mode de réalisation de l'invention sur les Figures 1 à 12 et ce second mode de réalisation de l'invention portent le même chiffre de référence, et ne seront pas décrits plus en détail ici lorsqu'ils sont de structures identiques.

Le pédalier 100 selon le second mode de réalisation est identique au pédalier 1 selon le premier mode de réalisation, à l'exception du fait que l'épaulement 2a ne comprend pas de trou oblong 31, que les excentriques 7 et 9 ne comprennent pas de troisième trou 7c et 9c, et que le pédalier 100 ne comprend pas de ressort de rappel 6, de tige de commande 32, de câble 34 ni de dispositif de réglage de tension de câble 44.

Au contraire, dans le second mode de réalisation de l'invention, le système de réglage de décalage angulaire du pédalier 100 comprend une masselotte 51 fixée en partie inférieure du tube interne 5 qui est monté libre en rotation dans les deux bagues 11 par l'intermédiaire de roulements à aiguilles 52, de telle sorte que la masselotte 51 agit comme un pendule provoquant un décalage angulaire du tube interne 5 dans le palier 2 lorsque ce dernier est incliné autour de son axe de révolution C1, entraînant ainsi un décalage angulaire identique des premier et second excentriques 7 et 9, de sorte que la position angulaire des premier et second excentriques 7 et 9 autour de l'axe de pédalier 4, à laquelle les premier et second bras de manivelle 14 et 25 ont un déploiement maximal, est automatiquement réglée à la position haute correspondant à l'aplomb vertical 47.

Ainsi, dans ce second mode de réalisation, l'ensemble constitué de la masselotte 51 et du tube interne 5 agit comme un pendule et permet le réglage automatique par gravité du décalage angulaire des excentriques 7 et 9 en fonction de l'inclinaison de la pente sur laquelle se trouve la bicyclette 43 (c'est-à-dire, de l'inclinaison du palier 2 autour de son axe de révolution C1), de telle sorte que le déploiement maximal des premier et second bras de manivelle 14 et 25 interviendra toujours à la position haute correspondant à l'aplomb vertical 47 quelle que soit la pente sur laquelle se trouve la bicyclette 43.

Le réglage du PMH est ainsi automatique, et le cycliste n'a pas à se préoccuper de celui-ci lorsqu'il pédale. Avantageusement, l'ensemble constitué de la masselotte 51 et du tube interne 5 est immergé dans un milieu visqueux contenu dans le palier 2, de manière à amortir l'oscillation du pendule. Le milieu visqueux peut, par exemple, être un bain d'huile ou un gel.

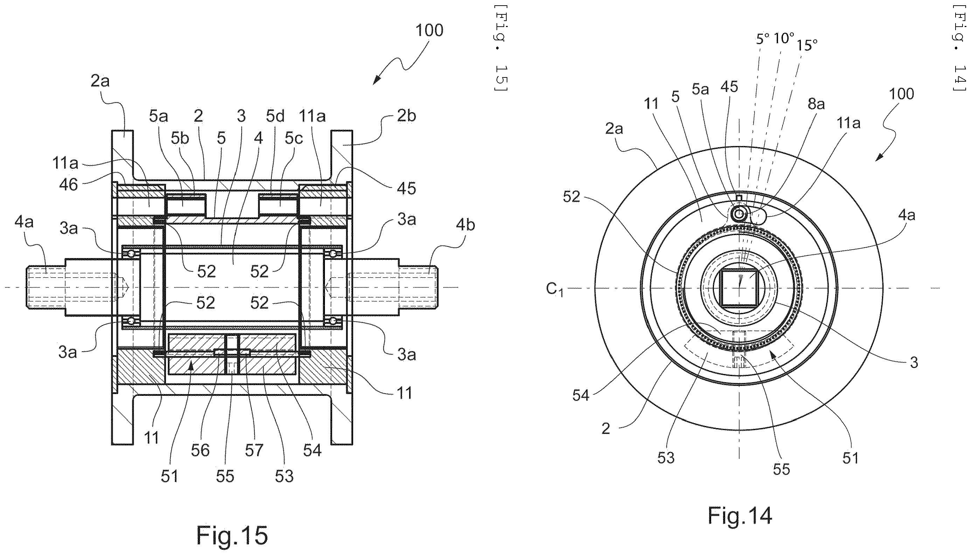

Le dimensionnement des trous oblongs 11a formés dans chacune des deux bagues 11 permet de définir la course possible des tiges de liaison 8a et 8b dans ceux-ci, et ainsi de limiter le décalage angulaire possible des excentriques 7 et 9 du pédalier 100. A titre d'exemple, le trou oblong 11a représenté à la Figure 14 permet d'obtenir un décalage angulaire pouvant aller de 0° et 15° par rapport à la verticale.

La Figure 13 représente en particulier la masselotte 51 qui comprend une première partie supérieure 54 et une seconde partie inférieure 53.

La première partie supérieure 54 possède une forme convexe et est disposée à l'intérieur du tube interne 5, tandis que la seconde partie inférieure 53 possède une forme concave et est disposée sous le tube interne 5. La forme convexe de la première partie supérieure 54 est complémentaire de la surface intérieure du tube interne 5, et la forme concave de la seconde partie inférieure 53 est complémentaire de la surface extérieure du tube interne 5.

Chacune des première et seconde parties 54 et 53 de la masselotte 51 possède un trou traversant 55.

La partie inférieure du tube interne 5 possède une encoche carrée 56 (visible sur la Figure 15) dans laquelle est insérée une saillie complémentaire 57 formée sous la première partie supérieure 54 de la masselotte 51, de manière à caler la première partie 54 de la masselotte 51 dans le tube interne 5. Les première et seconde parties 54 et 53 de la masselotte 51 sont ensuite assemblées ensemble par vissage à travers leurs trous traversants 55.

Bien que seuls les réglages de PMH de 0°, 5°, 10° et 15° aient été représentés sur les Figures, d'autres valeurs de PMH comprises entre 0° et 15° peuvent également être utilisées. En outre, le trou oblong 11a du pédalier 1, 100 pourrait également être allongé pour permettre un réglage de PMH supérieur à 15° (par exemple, de 20°), sans s'écarter du cadre de la présente invention.

Il est bien entendu que les modes de réalisations particuliers qui viennent d'être décrits ont été donnés à titre indicatif et non limitatif, et que des modifications peuvent être apportées sans que l'on s'écarte pour autant de la présente invention.

## Revendications

1. Pédalier (1 ; 100) à manivelles extensibles, comprenant:
- un palier (2) configuré pour faire partie d'un cadre de bicyclette ;
- un boîtier de pédalier (3) disposé dans le palier (2) et dans lequel est monté un axe de pédalier (4) de telle sorte que les deux extrémités (4a, 4b) de l'axe de pédalier (4) débouchent respectivement des deux ouvertures du palier (2) ;
- un tube interne (5) disposé à l'intérieur du palier (2), le boîtier de pédalier (3) traversant le tube interne (5) ;
- un premier excentrique (7) circulaire monté en rotation sur une première (4a) des deux extrémités de l'axe de pédalier (4) et relié de manière fixe à une première des deux extrémités du tube interne (5) ;
- un second excentrique (9) circulaire monté en rotation sur la seconde (4b) des deux extrémités de l'axe de pédalier (4) et relié de manière fixe à la seconde des deux extrémités du tube interne (5), les premier et second excentriques (7, 9) ayant le même axe de révolution (C2) qui est décalé d'une distance prédéfinie par rapport à l'axe de pédalier (4) ;
- un premier ensemble manivelle (12) comprenant un premier anneau (13) monté en rotation autour du premier excentrique (7) et un premier bras de manivelle (14) s'étendant radialement depuis le premier anneau (13), des roulements (15) étant disposés entre le premier excentrique (7) et le premier anneau (13), le premier ensemble manivelle (12) comprenant en outre un premier carter de manivelle (18) relié de manière fixe à la première extrémité (4a) de l'axe de pédalier (4) et logeant le premier excentrique (7), le premier anneau (13) et le premier bras de manivelle (14), le premier carter de manivelle (18) comprenant un premier bras creux (20) dans lequel le premier bras de manivelle (14) est inséré de manière coulissante et débouche de celui-ci ;
- un second ensemble manivelle (23) comprenant un second anneau (24) monté en rotation autour du second excentrique (9) et un second bras de manivelle (25) s'étendant radialement depuis le second anneau (24), des roulements (15) étant disposés entre le second excentrique (9) et le second anneau (24), les premier et second bras de manivelle (14, 25) s'étendant dans la même direction dans des sens opposés, le second ensemble manivelle (23) comprenant en outre un second carter de manivelle (27) relié de manière fixe à la seconde extrémité (4b) de l'axe de pédalier (4) et logeant le second excentrique (9), le second anneau (24) et le second bras de manivelle (25), le second carter de manivelle (27) comprenant un second bras creux (28) dans lequel le second bras de manivelle (25) est inséré de manière coulissante et débouche de celui-ci ; et **caractérisé en ce qu'**il comprend
- un système de réglage du décalage angulaire des premier et second excentriques (7, 9) autour de l'axe de pédalier (4), configuré pour régler, par rotation du tube interne (5) à l'intérieur du palier (2), la position angulaire des premier et second excentriques (7, 9) autour de l'axe de pédalier (4) à laquelle les premier et second bras de manivelle (14, 25) ont un déploiement maximal vis-à-vis respectivement des premier et second bras creux (20, 28).

2. Pédalier (1) selon la revendication 1, **caractérisé par le fait qu'**un épaulement (2a) est formé autour de l'ouverture du palier (2) côté premier excentrique (7), un trou oblong (31) étant ménagé dans ledit épaulement (2a) ;
dans lequel le système de réglage du décalage angulaire des premier et second excentriques (7, 9) comprend :
- un ressort de rappel (6) disposé entre le tube interne (5) et le palier (2) ;
- une tige de commande (32) insérée dans le trou oblong (31) de l'épaulement (2a) et dont la première extrémité est fixée au premier excentrique (7), le déplacement de la tige de commande (32) dans le trou oblong (31) provoquant le décalage angulaire du premier excentrique (7) autour de l'axe de pédalier (4), entraînant un décalage angulaire identique du tube interne (5) et du second excentrique (9) ;
- un câble (34) dont l'une des extrémités est fixée à la seconde extrémité de la tige de commande (32) ; et
- un dispositif de réglage de tension de câble (44) fixé à l'autre des extrémités du câble (34) et configuré pour permettre le réglage de la tension du câble (34), de manière à régler la position angulaire des premier et second excentriques (7, 9) autour de l'axe de pédalier (4) à laquelle les premier et second bras de manivelle (14, 25) ont un déploiement maximal vis-à-vis respectivement des premier et second bras creux (20, 28).

3. Pédalier (1) selon la revendication 2, **caractérisé par le fait que** la tige de commande (32) est fixée au premier excentrique (7) par l'intermédiaire d'un trou (7c) ménagé dans le premier excentrique (7) et dans lequel l'extrémité correspondante de la tige de commande (32) est emmanchée.

4. Pédalier (1) selon l'une des revendications 2 et 3, **caractérisé par le fait que** le ressort de rappel (6) est un ressort de torsion disposé autour du tube interne (5), l'une des extrémités du ressort de torsion étant fixée au tube interne (5) et l'autre extrémité du ressort de torsion étant fixée au palier (2).

5. Pédalier (1) selon l'une des revendications 2 à 4, **caractérisé par le fait que** le dispositif de réglage de tension de câble (44) est une manette comprenant une pluralité de positions possibles, chaque position correspondant à une valeur particulière de décalage angulaire des premier et second excentriques (7, 9), la manette possédant de préférence seize positions correspondant à des décalages angulaires allant respectivement de 0° à 15°, par pas de 1°, par rapport à la verticale.

6. Pédalier (100) selon la revendication 1, **caractérisé par le fait que** le système de réglage du décalage angulaire des premier et second excentriques (7, 9) comprend une masselotte (51) fixée en partie inférieure du tube interne (5) qui est monté libre en rotation dans le palier (2), de telle sorte que la masselotte (51) agit comme un pendule provoquant un décalage angulaire du tube interne (5) dans le palier (2) lorsque ce dernier est incliné autour de son axe de révolution (C1), entraînant un décalage angulaire identique des premier et second excentriques (7, 9), de sorte que la position angulaire des premier et second excentriques (7, 9) autour de l'axe de pédalier (4), à laquelle les premier et second bras de manivelle (14, 25) ont un déploiement maximal, est automatiquement réglée à la position haute correspondant à l'aplomb vertical (47).

7. Pédalier (1 ; 100) selon l'une des revendications 1 à 6, **caractérisé par le fait que** chacun des premier et second excentriques (7, 9) est fixé à l'extrémité correspondante du tube interne (5) par l'intermédiaire d'une tige de liaison (8a, 8b) respective dont l'une des extrémités est emmanchée dans un trou (7b, 9b) formé dans l'excentrique (7, 9) correspondant et dont l'autre des extrémités est emmanchée dans un trou (5a, 5c) formé dans un bossage (5b, 5d) ménagé sur l'extrémité correspondante du tube interne (5).

8. Pédalier (1 ; 100) selon l'une des revendications 1 à 7, **caractérisé par le fait qu'**il comprend en outre deux cuvettes (10) montées respectivement sur les deux extrémités du boîtier de pédalier (3), les deux cuvettes (10) étant disposées à l'intérieur du palier (2).

9. Pédalier (1 ; 100) selon la revendication 8 en dépendance de la revendication 7, **caractérisé par le fait que** chaque cuvette (10) est montée à l'intérieur d'une bague (11) respective disposée dans l'ouverture correspondante du palier (2), chaque bague (11) comprenant un trou oblong (11a) traversé par la tige de liaison (8a, 8b) correspondante.

10. Pédalier (1 ; 100) selon l'une des revendications 1 à 9, **caractérisé par le fait que** les premier et second bras de manivelle (14, 25) sont chacun dotés de roulements (22) de manière à faciliter leur coulissement dans les premier et second bras creux (20, 28).

11. Pédalier (1 ; 100) selon l'une des revendications 1 à 10, **caractérisé par le fait que** des joints d'étanchéité (29) sont disposés entre le premier carter de manivelle (18) et le palier (2) et entre le second carter de manivelle (27) et le palier (2).

12. Bicyclette (43) comprenant un pédalier (1) selon l'une des revendications 1 à 11, le palier (2) du pédalier (1 ; 100) faisant partie du cadre (48) de la bicyclette (43).

13. Bicyclette (43) selon la revendication 12 en dépendance de la revendication 2, **caractérisée par le fait que** le dispositif de réglage de tension de câble (44) est fixé sur l'un parmi le guidon de la bicyclette (43) et l'un des tubes du cadre (48) de la bicyclette (43).

## Patentansprüche

1. - Tretlager (1; 100) mit ausfahrbaren Kurbeln, umfassend
- ein Lager (2), das konfiguriert ist, um Teil eines Fahrradrahmens zu sein;
- ein Tretlagergehäuse (3), das in dem Lager (2) angeordnet ist und in dem eine Tretlagerachse (4) montiert ist, sodass die zwei Enden (4a, 4b) der Tretlagerachse (4) jeweils aus den zwei Öffnungen des Lagers (2) münden;
- ein Innenrohr (5), das im Inneren des Lagers (2) angeordnet ist, wobei das Tretlagergehäuse (3) das Innenrohr (5) durchquert;
- einen ersten kreisförmigen Exzenter (7), der drehbar an einem ersten (4a) der zwei Enden der Tretlagerachse (4) montiert und fest mit einem ersten der zwei Enden des Innenrohrs (5) verbunden ist;
- einen zweiten kreisförmigen Exzenter (9), der drehbar an dem zweiten (4b) der zwei Enden der Tretlagerachse (4) montiert und fest mit dem zweiten der zwei Enden des Innenrohrs (5) verbunden ist, wobei der erste und der zweite Exzenter (7, 9) die gleiche Drehachse (C2) aufweisen, die um einen vordefinierten Abstand in Bezug auf die Tretlagerachse (4) versetzt ist;
- eine erste Kurbelanordnung (12), umfassend einen ersten Ring (13), der drehbar um den ersten Exzenter (7) montiert ist, und einen ersten Kurbelarm (14), der sich radial von dem ersten Ring (13) erstreckt, wobei zwischen dem ersten Exzenter (7) und dem ersten Ring (13) Lager (15) angeordnet sind, die erste Kurbelanordnung (12) ferner umfassend ein erstes Kurbelgehäuse (18), das fest mit dem ersten Ende (4a) der Tretlagerachse (4) verbunden ist und den ersten Exzenter (7), den ersten Ring (13) und den ersten Kurbelarm (14) aufnimmt, das erste Kurbelgehäuse (18) umfassend einen ersten hohlen Arm (20) umfasst, in den der erste Kurbelarm (14) verschiebbar eingesetzt ist und aus dem er mündet;
- eine zweite Kurbelanordnung (23), umfassend zweiten Ring (24), der drehbar um den zweiten Exzenter (9) montiert ist, und einen zweiten Kurbelarm (25), der sich radial von dem zweiten Ring (24) erstreckt, wobei zwischen dem zweiten Exzenter (9) und dem zweiten Ring (24) Lager (15) angeordnet sind und sich der erste und der zweite Kurbelarm (14, 25) in derselben Richtung in entgegengesetzten Richtungen erstrecken, die zweite Kurbelanordnung (23) ferner umfassend ein zweites Kurbelgehäuse (27), das fest mit dem zweiten Ende (4b) der Tretlagerachse (4) verbunden ist und den zweiten Exzenter (9), den zweiten Ring (24) und den zweiten Kurbelarm (25) aufnimmt, das zweite Kurbelgehäuse (27) umfassend einen zweiten hohlen Arm (28), in den der zweite Kurbelarm (25) verschiebbar eingesetzt ist und aus dem er mündet; und
**dadurch gekennzeichnet, dass** sie Folgendes umfasst
- ein Einstellsystem des Winkelversatzes des ersten und des zweiten Exzenters (7, 9) um die Tretlagerachse (4), das konfiguriert ist, um durch Drehen des Innenrohrs (5) im Inneren des Lagers (2) die Winkelposition des ersten und des zweiten Exzenters (7, 9) um die Tretlagerachse (4) einzustellen, bei der erste und der zweite Kurbelarm (14, 25) eine maximale Entfaltung gegenüber dem ersten bzw. dem zweiten hohlen Arm (20, 28) aufweisen.

2. - Tretlager (1) nach Anspruch 1, **dadurch gekennzeichnet, dass** eine Schulter (2a) Seite erster Exzenter (7) um die Öffnung des Lagers (2) gebildet ist, wobei in der Schulter (2a) ein Langloch (31) ausgebildet ist;
wobei das Einstellsystem des Winkelversatzes des ersten und des zweiten Exzenters (7, 9) Folgendes umfasst:
- eine Rückholfeder (6), die zwischen dem Innenrohr (5) und dem Lager (2) angeordnet ist;
- eine Steuerstange (32), die in das Langloch (31) der Schulter (2a) eingesetzt ist und deren erstes Ende an dem ersten Exzenter (7) befestigt ist, wobei die Bewegung der Steuerstange (32) in dem Langloch (31) den Winkelversatz des ersten Exzenters (7) um die Tretlagerachse (4) bewirkt, was einen identischen Winkelversatz des Innenrohrs (5) und des zweiten Exzenters (9) zur Folge hat;
- ein Kabel (34), dessen eine Ende an dem zweiten Ende der Steuerstange (32) befestigt ist; und
- eine Kabelspannungseinstellvorrichtung (44), die an dem anderen der Enden des Kabels (34) befestigt und konfiguriert ist, um die Einstellung der Spannung des Kabels (34) zu ermöglichen, um die Winkelposition des ersten und des zweiten Exzenters (7, 9) um die Tretlagerachse (4) einzustellen, bei der erste und der zweite Kurbelarm (14, 25) eine maximale Auslenkung gegenüber dem ersten bzw. dem zweiten hohlen Arm (20, 28) aufweisen.

3. - Tretlager (1) nach Anspruch 2, **dadurch gekennzeichnet, dass** die Steuerstange (32) über ein Loch (7c) das in dem ersten Exzenter (7) eingebracht ist und in das das entsprechende Ende der Steuerstange (32) eingepresst ist, an dem ersten Exzenter (7) befestigt ist.

4. - Tretlager (1) nach einem der Ansprüche 2 und 3, **dadurch gekennzeichnet, dass** die Rückholfeder (6) eine Torsionsfeder ist, die um das Innenrohr (5) angeordnet ist, wobei ein Ende der Torsionsfeder an dem Innenrohr (5) befestigt ist und das andere Ende der Torsionsfeder an dem Lager (2) befestigt ist.

5. - Tretlager (1) nach einem der Ansprüche 2 bis 4, **dadurch gekennzeichnet, dass** die Kabelspannungseinstellvorrichtung (44) ein Hebel ist, umfassend eine Vielzahl von möglichen Positionen, wobei jede Position einem jeweiligen Wert des Winkelversatzes des ersten und des zweiten Exzenters (7, 9) entspricht, wobei der Hebel vorzugsweise sechzehn Positionen besitzt, die jeweils Winkelversätzen von 0° bis 15° in Schritten von 1° von der Vertikalen entsprechen.

6. - Tretlager (100) nach Anspruch 1, **dadurch gekennzeichnet, dass** das Einstellsystem des Winkelversatzes des ersten und des zweiten Exzenters (7, 9) ein Gewicht (51) umfasst, das im unteren Teil des Innenrohrs (5) befestigt ist, das frei drehbar in dem Lager (2) montiert ist, sodass das Gewicht (51) wie ein Pendel wirkt, das einen Winkelversatz des Innenrohrs (5) in dem Lager (2) bewirkt, wenn dieses um seine Drehachse (Cl) geneigt wird, einen identischen Winkelversatz des ersten und des zweiten Exzenters (7, 9) bewirkt, sodass die Winkelposition des ersten und des zweiten Exzenters (7, 9) um die Tretlagerachse (4), bei der der erste und der zweite Kurbelarm (14, 25) eine maximale Entfaltung aufweisen, automatisch auf die obere Position eingestellt wird, die dem vertikalen Lot (47) entspricht.

7. - Tretlager (1; 100) nach einem der Ansprüche 1 bis 6, **dadurch gekennzeichnet, dass** jeder von dem ersten und dem zweiten Exzenter (7, 9) an dem entsprechenden Ende des Innenrohrs (5) über einen jeweiligen Verbindungsstift (8a, 8b) verbunden ist, dessen eine Ende in ein Loch (7b, 9b) eingepresst ist, das in dem entsprechenden Exzenter (7, 9) gebildet ist, und dessen andere Ende in ein Loch (5a, 5c) eingepasst ist, das in einem Vorsprung (5b, 5d) gebildet ist, der an dem entsprechenden Ende des Innenrohrs (5) ausgebildet ist.

8. - Tretlager (1; 100) nach einem der Ansprüche 1 bis 7, **dadurch gekennzeichnet, dass** es ferner zwei Ringscheiben (10) umfasst, die jeweils an den zwei Enden des Tretlagergehäuses (3) montiert sind, wobei die zwei Ringscheiben (10) im Inneren des Lagers (2) angeordnet sind.

9. - Tretlager (1; 100) nach Anspruch 8 abhängig von Anspruch 7, **dadurch gekennzeichnet, dass** jede Ringscheibe (10) im Inneren eines jeweiligen Rings (11) angebracht ist, der in der entsprechenden Öffnung des Lagers (2) angeordnet ist, wobei jeder Ring (11) ein Langloch (11a) umfasst, das durch den entsprechenden Verbindungsstift (8a, 8b) durchquert wird.

10. - Tretlager (1; 100) nach einem der Ansprüche 1 bis 9, **dadurch gekennzeichnet, dass** der erste und der zweite Kurbelarm (14, 25) jeweils mit Lagern (22) versehen sind, um ihr Gleiten in dem ersten und dem zweiten hohlen Arm (20, 28) zu erleichtern.

11. - Tretlager (1; 100) nach einem der Ansprüche 1 bis 10, **dadurch gekennzeichnet, dass** Dichtungen (29) zwischen dem ersten Kurbelgehäuse (18) und dem Lager (2) und zwischen dem zweiten Kurbelgehäuse (27) und dem Lager (2) angeordnet sind.

12. - Fahrrad (43), umfassend ein Tretlager (1) nach einem der Ansprüche 1 bis 11, wobei das Lager (2) des Tretlagers (1; 100) Teil des Rahmens (48) des Fahrrads (43) ist.

13. - Fahrrad (43) nach Anspruch 12 abhängig von Anspruch 2, **dadurch gekennzeichnet, dass** die Kabelspannungseinstellvorrichtung (44) an einem von der Lenkstange des Fahrrads (43) und einem der Rahmenrohre (48) des Fahrrads (43) befestigt ist.

## Claims

1. - A crankset (1; 100) with extensible cranks, comprising:
- a bearing (2) configured to form part of a bicycle frame;
- a bottom bracket shell (3) arranged in the bearing (2) and in which a bottom bracket axle (4) is mounted such that the two ends (4a, 4b) of the bottom bracket axle (4) come out of the two openings of the bearing (2) respectively;
- an inner tube (5) arranged inside the bearing (2), the bottom bracket shell (3) passing through the inner tube (5);
- a first circular eccentric (7) rotatably mounted on a first (4a) of the two ends of the bottom bracket axle (4) and fixedly connected to a first of the two ends of the inner tube (5);
- a second circular eccentric (9) rotatably mounted on the second (4b) of the two ends of the bottom bracket axle (4) and fixedly connected to the second of the two ends of the inner tube (5), the first and second eccentrics (7, 9) having the same rotation axis (C2) that is offset from the bottom bracket axle (4) by a predefined distance;
- a first crank assembly (12) comprising a first ring (13) rotatably mounted about the first eccentric (7) and a first crank arm (14) radially extending from the first ring (13), wherein bearings (15) are disposed between the first eccentric (7) and the first ring (13), the first crank assembly (12) further comprising a first crank housing (18) fixedly connected to the first end (4a) of the bottom bracket axle (4) and housing the first eccentric (7), the first ring (13) and the first crank arm (14), the first crank housing (18) comprising a first hollow arm (20) in which the first crank arm (14) is slidably inserted and comes out therefrom;
- a second crank assembly (23) comprising a second ring (24) rotatably mounted about the second eccentric (9) and a second crank arm (25) radially extending from the second ring (24), wherein bearings (15) are disposed between the second eccentric (9) and the second ring (24), the first and second crank arms (14, 25) extending in the same direction in opposite senses, the second crank assembly (23) further comprising a second crank housing (27) fixedly connected to the second end (4b) of the bottom bracket axle (4) and housing the second eccentric (9), the second ring (24) and the second crank arm (25), the second crank housing (27) comprising a second hollow arm (28) in which the second crank arm (25) is slidably inserted and comes out therefrom; and
**characterized in that** it comprises:
- a system for adjusting the angular offset of the first and second eccentrics (7, 9) about the bottom bracket axle (4), configured to adjust, by rotating the inner tube (5) inside the bearing (2), the angular position of the first and second eccentrics (7, 9) about the bottom bracket axle (4) at which the first and second crank arms (14, 25) have maximum extension relative to the first and second hollow arms (20, 28) respectively.

2. - The crankset (1) according to claim 1, **characterized in that** a flange (2a) is formed around the opening of the bearing (2) on the first eccentric (7) side, an oblong hole (31) being provided in said flange (2a); wherein the system for adjusting the angular offset of the first and second eccentrics (7, 9) comprises:
- a return spring (6) arranged between the inner tube (5) and the bearing (2);
- a control rod (32) inserted in the oblong hole (31) of the flange (2a) and whose first end is fixed to the first eccentric (7), the movement of the control rod (32) in the oblong hole (31) causing the angular offsetting of the first eccentric (7) about the bottom bracket axle (4), resulting in an identical angular offsetting of the inner tube (5) and the second eccentric (9);
- a cable (34), one end of which is fixed to the second end of the control rod (32); and
- a cable tension adjuster (44) fixed to the other of the ends of the cable (34) and configured to enable adjustment of the tension of the cable (34), so as to adjust the angular position of the first and second eccentrics (7, 9) about the bottom bracket axle (4) at which the first and second crank arms (14, 25) have maximum extension relative to the first and second hollow arms (20, 28) respectively.

3. - The crankset (1) according to claim 2, **characterized in that** the control rod (32) is fixed to the first eccentric (7) by means of a hole (7c) provided in the first eccentric (7) and in which the corresponding end of the control rod (32) is joined.

4. - The crankset (1) according to one of claims 2 and 3, **characterized in that** the return spring (6) is a torsion spring arranged around the inner tube (5), one end of the torsion spring being fixed to the inner tube (5) and the other end of the torsion spring being fixed to the bearing (2).

5. - The crankset (1) according to one of claims 2 to 4, **characterized in that** the cable tension adjuster (44) is a lever comprising a plurality of possible positions, each position corresponding to a particular value of angular offset of the first and second eccentrics (7, 9), the lever preferably having sixteen positions corresponding to angular offsets ranging respectively from 0° to 15°, in steps of 1°, relative to the vertical.

6. - The crankset (100) according to claim 1, **characterized in that** the system for adjusting the angular offset of the first and second eccentrics (7, 9) comprises a flyweight (51) fixed to the lower part of the inner tube (5) which is mounted so as to freely rotate in the bearing (2), so that the flyweight (51) acts as a pendulum causing an angular offsetting of the inner tube (5) in the bearing (2) when the latter is tilted about its rotation axis (C1), causing an identical angular offsetting of the first and second eccentrics (7, 9), such that the angular position of the first and second eccentrics (7, 9) about the bottom bracket axle (4), at which the first and second crank arms (14, 25) have maximum extension, is automatically adjusted to the high position corresponding to vertical plumb (47).

7. - The crankset (1; 100) according to one of claims 1 to 6, **characterized in that** each of the first and second eccentrics (7, 9) is fixed to the corresponding end of the inner tube (5) by means of a respective connecting rod (8a, 8b), one end of which is joined into a hole (7b, 9b) formed in the corresponding eccentric (7, 9) and the other end of which is joined into a hole (5a, 5c) formed in a boss (5b, 5d) provided on the corresponding end of the inner tube (5).

8. - The crankset (1; 100) according to one of claims 1 to 7, **characterized in that** it further comprises two cups (10) mounted respectively on the two ends of the bottom bracket shell (3), the two cups (10) being arranged inside the bearing (2).

9. - The crankset (1; 100) according to claim 8 depending on claim 7, **characterized in that** each cup (10) is mounted inside a respective ring (11) arranged in the corresponding opening of the bearing (2), each ring (11) comprising an oblong hole (11a) through which the corresponding connecting rod (8a, 8b) passes.

10. - The crankset (1; 100) according to one of claims 1 to 9, **characterized in that** the first and second crank arms (14, 25) are each provided with bearings (22) so as to facilitate the sliding thereof in the first and second hollow arms (20, 28).

11. - The crankset (1; 100) according to one of claims 1 to 10, **characterized in that** seals (29) are arranged between the first crank housing (18) and the bearing (2) and between the second crank housing (27) and the bearing (2).

12. - A bicycle (43) comprising a crankset (1) according to one of claims 1 to 11, the bearing (2) of the crankset (1; 100) forming part of the frame (48) of the bicycle (43).

13. - The bicycle (43) according to claim 12 depending on claim 2, **characterized in that** the cable tension adjuster (44) is fixed to one of the handlebar of the bicycle (43) and one of the tubes of the frame (48) of the bicycle (43).
